# FASCICULE DE BREVET EUROPEEN

(11) **EP 4 170 629 B1**
(45) Date de publication et mention de la délivrance du brevet: **17.09.2025**
(21) Numéro de dépôt: 22202202.2
(22) Date de dépôt: 18.10.2022
(51) Int. Cl.: G05D 1/00, G01C 21/20, G08G 5/21, G08G 5/32, G08G 5/76

(54) **SYSTÈME DE CALCUL DE MISSION D'UN AÉRONEF, PROPRE À CALCULER UN INDICE DE BÉNÉFICE ENVIRONNEMENTAL, ET PROCÉDÉ ASSOCIÉ**
SYSTEM ZUR BERECHNUNG DER MISSION EINES LUFTFAHRZEUGS, DAS ZUR BERECHNUNG EINES UMGEBUNGSBENUTZUNGSINDEX GEEIGNET IST, UND VERFAHREN DAFÜR
MISSION CALCULATION SYSTEM FOR AN AIRCRAFT, SUITABLE FOR CALCULATING AN ENVIRONMENTAL BENEFIT INDEX, AND ASSOCIATED METHOD

(30) Priorité: 19.10.2021 FR 2111077
(43) Date de publication de la demande: 26.04.2023
(73) Titulaire: Dassault Aviation, 75008 Paris (FR)
(72) Inventeur: GRIMALD, Cyrille, 92214 SAINT CLOUD (FR); URIEN, Benoît, 92214 SAINT CLOUD (FR)
(74) Mandataire: Lavoix

(56) Documents cités:
- US-A1- 2014 244 077
- US-A1- 2016 163 201
- RAMASAMY SUBRAMANIAN ET AL: "Novel flight management system for improved safety and sustainability in the CNS+A context", 2015 INTEGRATED COMMUNICATION, NAVIGATION AND SURVEILLANCE CONFERENCE (ICNS), IEEE, 21 April 2015 (2015-04-21), XP032784054, DOI: 10.1109/ICNSURV.2015.7121225

## Description

La présente invention concerne un système de calcul de mission d'un aéronef selon le préambule de la revendication 1.

US 2014/244077, US 2016/163201, et l'article de RAMASAMY SUBRAMANIAN ET AL. à la conférence « 2015 Integrated communication, navigation and surveillance conference (ICNS) IEEE » daté du 21 avril 2015, divulguent des systèmes de calcul de mission d'aéronefs.

L'invention s'applique aux aéronefs utilisés dans l'aviation civile, en particulier dans l'aviation d'affaires.

Un tel système de calcul est notamment destiné à être intégré dans un cockpit, en parallèle d'un système de conduite de vol (« Flight Management System » ou « FMS » en anglais), pour permettre à l'équipage de déterminer des trajectoires de mission.

En variante, le système de calcul est propre à être intégré dans un système de planification de mission non embarqué, par exemple dans une infrastructure aéroportuaire d'établissement de trajectoire d'aéronef, dans un bagage de vol électronique (« Electronic Flight Bag » ou « EFB »,), et/ou dans un dispositif électronique portable (par exemple une tablette), ou dans un ordinateur de type PC ou serveur au sol.

Le système de calcul est adapté pour déterminer une trajectoire complète de l'aéronef entre un premier point géographique d'origine et un deuxième point géographique de destination. La mission comprend une ou plusieurs étapes.

La préparation et la définition d'une mission d'aéronef entre un premier point géographique et un deuxième point géographique est une tâche consommatrice en temps. Elle nécessite notamment de déterminer la route que va suivre l'aéronef, le profil de vol associé, le chargement en passagers, en fret et en carburant et le calcul de performances basses vitesses, ainsi que la vérification du domaine de vol de l'aéronef.

Cette définition est effectuée en fonction d'un contexte de mission incluant la météorologie, les routes aériennes à emprunter, la connectivité avec des systèmes de communication par satellite et d'un contexte avion qui inclut la configuration et le type d'aéronef utilisé, ainsi que son état de fonctionnement.

Généralement, dans l'aviation civile, les compagnies aériennes et/ou des fournisseurs externes disposent de systèmes de calcul permettant de fournir un plan de vol et des performances aéronef attendues, par exemple une quantité de carburant requise.

Dans l'aviation d'affaires, les contraintes pesant sur l'équipage sont importantes et spécifiques. Les clients demandent parfois à l'équipage de respecter des critères de mission plus stricts, par exemple en matière de confort du passager pendant le vol, de possibilité de se connecter à des systèmes de transmission par satellite, de masse offerte par l'avion etc.

De plus, les conditions de mission, notamment les horaires de décollage, sont sujets à changement et la destination peut changer rapidement en fonction des besoins propres des passagers.

Dans ce cadre, les systèmes de fournitures de plans de vol existants ne donnent pas entière satisfaction.

En particulier, ces systèmes sont conçus pour fonctionner sur une somme de critères d'entrée (vitesse, niveau de vol, nombre de passagers...) auquel correspondra une seule solution de navigation. Il est donc fréquemment nécessaire d'effectuer plusieurs itérations pour ajuster les hypothèses de mission.

Les résultats obtenus par les systèmes de fournisseurs de plan de vol sont en outre généralement incomplets en ce qui concerne les critères requis pour effectuer la mission, notamment dans la gestion des critères clients, du contexte avion et des performances.

Par conséquent, les solutions de trajectoires proposées par le fournisseur ne sont pas satisfaisantes pour le client et/ou résultent en un temps de vol non optimal et/ou en une consommation en carburant augmentée.

Pour améliorer ces systèmes, EP 3 489 931 décrit un système de calcul de mission de type précité, dans laquelle un utilisateur peut choisir des spécifications opérationnelles de la mission, et déterminer au moins une trajectoire optimale de la mission, qui tient compte des spécifications opérationnelles définies par l'utilisateur, en offrant différentes options à l'utilisateur.

Un tel système de calcul peut encore être amélioré. En effet, les contraintes environnementales de réduction d'émission de gaz à effet de serre s'appliquent à l'aviation civile, en particulier à l'aviation d'affaires.

Les avionneurs visent à réduire les émissions produites par les aéronefs, en améliorant la conception des aéronefs, par exemple en modifiant leur aérodynamisme ou/et en les allégeant. Cependant, l'impact sur l'environnement d'une trajectoire optimisée par rapport à une trajectoire de base fournie par un fournisseur externe, ou dans l'absolu, n'est pas facilement maîtrisé ou quantifié par un utilisateur de l'aéronef.

Un but de l'invention est donc de fournir un système de calcul de mission d'aéronef, qui permet à l'équipage de définir facilement une trajectoire optimisée, en tenant compte des contraintes environnementales.

A cet effet, l'invention a pour objet un système de calcul de mission selon la revendication 1.

Le système selon l'invention peut comprendre l'une ou plusieurs des caractéristiques des revendications 2 à 12, prises isolément ou suivant toutes combinaisons techniquement possibles..

L'invention a également pour objet un procédé de calcul de mission d'un aéronef, mis en œuvre à l'aide d'un système de calcul de mission selon la revendication 13.

Le procédé selon l'invention peut comprendre l'une ou plusieurs des caractéristiques des revendications 14 ou 15, prises isolément ou suivant toutes combinaisons techniquement possibles.

L'invention sera mieux comprise à la lecture de la description qui va suivre, donnée uniquement à titre d'exemple, et faite en se référant aux dessins annexés, sur lesquels :
- [Fig. 1] la figure 1 est un schéma synoptique illustrant un premier système de calcul de mission selon l'invention ;
- [Fig. 2] la figure 2 est une vue d'une fonction de définition d'un indice de bénéfice environnemental défini par le système de calcul de mission selon l'invention, pour une trajectoire potentielle de l'aéronef ;

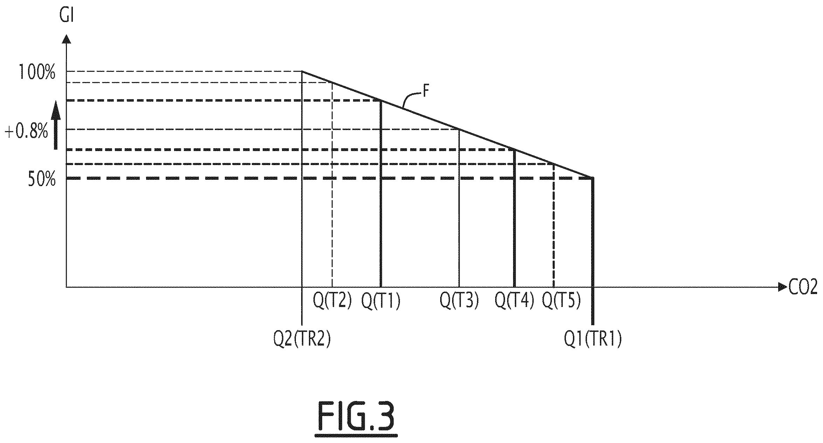

- [Fig. 3] la figure 3 est une vue analogue à la figure 2 illustrant le calcul, par le système de calcul de mission d'indice de bénéfice environnemental sur plusieurs trajectoires proposées à l'utilisateur, préalablement à une mission ;
- [Fig. 4] la figure 4 est une vue d'une fenêtre de présentation d'un indicateur de bénéfice environnemental de plusieurs trajectoires potentielles, en référence à une trajectoire de base de référence, telle que présentée à l'utilisateur ;
- [Fig. 5] la figure 5 est une vue schématique d'une affichage d'une trajectoire de base sur un afficheur du système de calcul selon l'invention ;
- [Fig. 6] la figure 6 est une vue analogue à la figure 5 illustrant une fenêtre de sélection de stratégies d'optimisation de trajectoire dans une zone à optimiser propre à être sélectionnée par l'utilisateur ;
- [Fig. 7] la figure 7 est une vue analogue à la figure 6, après optimisation dans la zone à optimiser ;
- [Fig. 8] la figure 8 est une vue analogue à la figure 7, après contournement d'une zone à éviter ;
- [Fig. 9] la figure 9 est une vue schématique illustrant le principe de fonctionnement d'un exemple de moteur de calcul de trajectoires pouvant être utilisé dans le système de calcul selon l'invention ;
- [Fig. 10] la figure 10 est une vue schématique d'un deuxième système de calcul de mission selon l'invention.

Sur les figures, les vues illustrant des fenêtres réelles du système de calcul de mission comprennent des indications en anglais, conformément aux normes dans le domaine aéronautique. Une traduction en français de ces indications est fournie dans la description, si nécessaire.

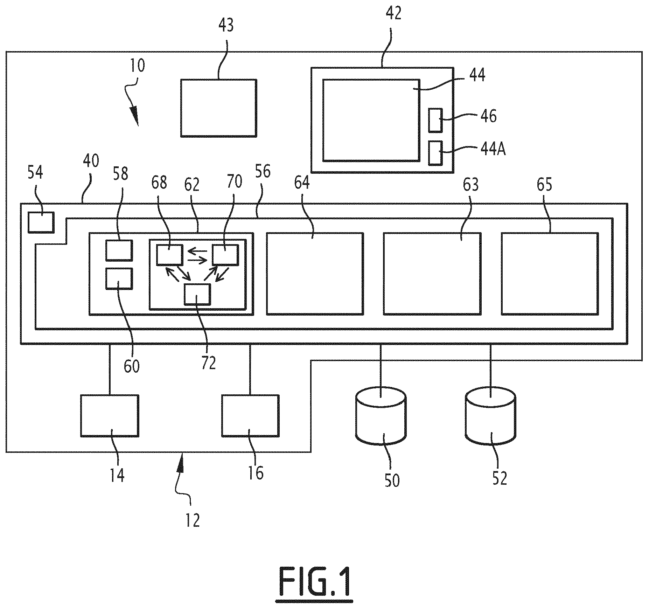

Un premier système 10 de calcul de mission selon l'invention, qui, dans cet exemple, est présent dans le cockpit 12 d'un aéronef, est illustré par la figure 1.

L'aéronef est de préférence un aéronef civil, notamment un avion d'affaires.

D'une manière connue, le cockpit 12 de l'aéronef est destiné à commander l'ensemble des systèmes de l'aéronef lors de son utilisation.

Le cockpit 12 comporte notamment, outre le système 10 de calcul de mission, un système 14 de conduite de vol du cockpit de l'aéronef (« Flight Management System » en anglais ou « FMS »), et un système 16 de gestion et de suivi des différents systèmes avion.

Le système de conduite de vol 14 est destiné à assister le pilote de l'aéronef pour mener la navigation de l'aéronef lors d'une mission. Il est propre à fournir des informations notamment sur la route suivie par l'aéronef, et sur des paramètres d'évolution de l'aéronef tels que la consommation en carburant.

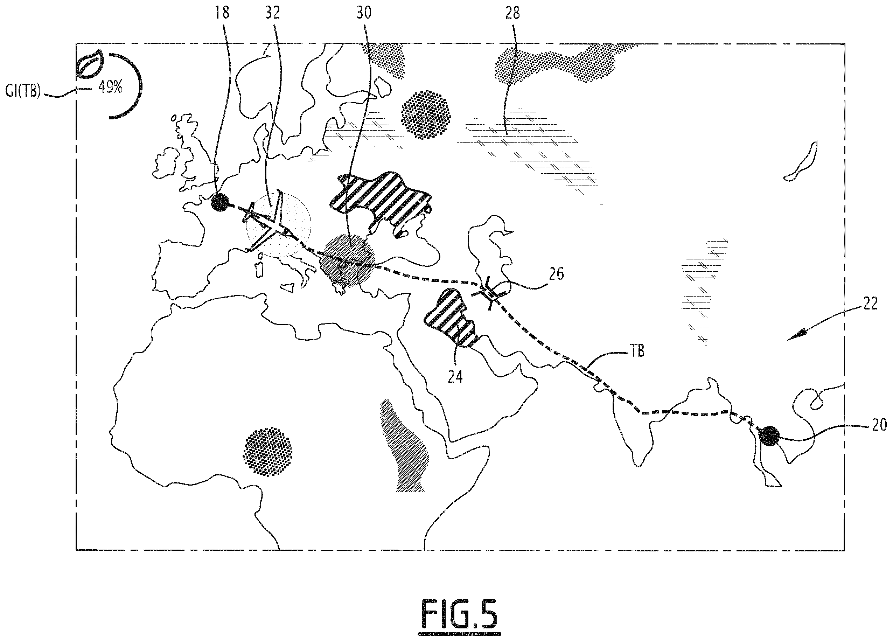

Il est également propre à guider l'aéronef pour lui faire suivre une trajectoire prédéterminée entre un premier point géographique 18 d'origine et un deuxième point géographique 20 de destination (représentés schématiquement sur la figure 5).

Le système 16 de gestion et de suivi des différents systèmes avion est notamment destiné à permettre à l'équipage de suivre et éventuellement de piloter l'ensemble des systèmes aéronef. Il est propre en particulier à déterminer un état de fonctionnement de l'aéronef, notamment la présence de défauts et de pannes présents sur l'aéronef au sol et/ou en vol. Comme on le verra plus bas, le système de calcul de mission 10 selon l'invention est raccordé au système de gestion 16 pour prendre en compte l'état de l'avion dans les calculs de mission.

La mission effectuée par l'aéronef comporte au moins une étape 22 (ou « leg »), représentée schématiquement sur la figure 5, entre un premier point géographique 18 d'origine et un deuxième point géographique 20 de destination. Dans certains cas (non représentés), la mission effectuée par l'aéronef comporte une pluralité d'étapes 22 successives, le deuxième point géographique 20 de destination d'une première étape constituant le premier point géographique 18 d'origine d'une deuxième étape.

La mission est effectuée en suivant des spécifications opérationnelles qui comprennent notamment un contexte de mission, un contexte avion, un contexte passager et éventuellement un mode d'optimisation de la trajectoire.

Le contexte de mission comporte par exemple au moins une contrainte d'opération, notamment un nombre de passagers à transporter, un poids maximum au décollage lié notamment à une longueur de piste disponible, une charge en carburant de navigation, une charge en carburant de réserve, un horaire de départ et/ou un horaire d'arrivée imposés, une distance maximale à parcourir, et/ou une distance à un terrain alternatif en route.

En référence à la figure 5, le contexte de mission comprend avantageusement des contraintes de navigation, comme par exemple des zones 24 ou des niveaux de vol interdits, des routes 26 aériennes ou des niveaux de vol imposés, ou plus globalement des zones de vol libre et/ou des zones de vol imposé par les voies aériennes.

Le contexte de mission comprend avantageusement des contraintes météorologiques telles que des zones 28 de phénomènes météorologiques dangereux notamment de formation de gel ou de cumulonimbus.

Le contexte de mission comprend éventuellement aussi des contraintes de confort passager, notamment des zones 30 de turbulences à éviter, en particulier en fonction d'un niveau de turbulences souhaité, choisi par exemple parmi un niveau faible, un niveau moyen, et un niveau fort de turbulences, ou des zones 32 de couverture de télécommunication par satellite pour permettre une télécommunication entre l'aéronef et le monde extérieur notamment au sol, en particulier choisi parmi un niveau faible, un niveau moyen et un bon niveau de possibilité de communication.

Dans cet exemple, les différentes zones 24, 28, 30, 32 sont définies de préférence par des coordonnées horizontales (par exemple latitude et longitude) et par des coordonnées verticales en altitude. La position de ces zones évolue avantageusement au cours du temps. Dans ce cas, les coordonnées précitées évoluent temporellement, définissant une zone quadridimensionnelle (ou 4D) d'évitement ou au contraire une zone quadridimensionnelle de passage souhaité ou contraint.

Les zones 24, 28, 30, 32 définissent donc des sections horizontales d'évitement ou au contraire, des sections horizontales de passage souhaité ou contraint. Elles définissent par ailleurs, dans le plan vertical, des sections verticales d'évitement ou au contraire, des sections verticales de passage souhaité ou contraint. La position des zones 24, 28, 30, 32 évolue avantageusement dans le temps.

Le contexte avion peut comprendre des contraintes d'utilisation liées à des autorisations à partir (ou « dispatch ») et/ou des contraintes liées à un état particulier de l'aéronef en termes de défauts et/ou de pannes sur un ou plusieurs équipements de l'aéronef.

Par exemple, une autorisation à partir liée à certains défauts de l'aéronef peut imposer un niveau de vol maximal et/ou une vitesse maximale. Un défaut de rentrée du train d'atterrissage ou d'un volet peut également imposer une contrainte de consommation en carburant augmentée.

Le mode d'optimisation de la trajectoire inclut par exemple une minimisation de la quantité de carburant emporté par l'aéronef, un Mach réduit de l'aéronef, un calcul exact du poids et de l'équilibre de l'aéronef, une optimisation verticale de trajectoire autorisant le vol à plusieurs niveaux de vol, et/ou une optimisation de route impliquant une trajectoire en vol libre ou contrainte par les routes aériennes, ceci pouvant être optimisé par morceaux et donc avoir des critères d'optimisation différentes sur un même vol en fonction des zone traversées. L'obtention de la trajectoire en vol libre est éventuellement suivie d'une optimisation de trajectoire autour de la trajectoire en vol libre pour respecter des points de passage imposés, et des trajectoires imposés entre les points de passage imposés.

Le système de calcul de mission 10 est destiné à établir au moins une trajectoire potentielle de l'aéronef pour effectuer l'étape 22 entre au moins un premier point géographique 18 d'origine et au moins un deuxième point géographique 20 de destination, en tenant compte des spécifications opérationnelles, notamment du contexte de mission, du contexte avion et du mode d'optimisation.

De préférence, comme on le verra plus bas, le système de calcul de mission 10 est destiné à établir, préalablement à la mission, une pluralité de trajectoires potentielles de l'aéronef suivant des spécifications opérationnelles différentes, pour permettre à l'utilisateur de disposer de plusieurs opportunités de trajectoires.

En outre, préalablement à la mission ou en cours de mission, le système de calcul de mission 10 est destiné à établir, sur sélection de l'utilisateur, au moins une trajectoire potentielle à partir d'une trajectoire de base en modifiant les spécifications opérationnelles sur au moins une zone d'optimisation et/ou une zone d'évitement.

Selon l'invention, le système de calcul de mission 10 est propre à déterminer, pour la ou pour chaque trajectoire potentielle, un indice de bénéfice environnemental associé à la trajectoire potentielle.

La trajectoire obtenue par l'intermédiaire du système de calcul de mission 10 inclut la route de l'aéronef en latitude et en longitude, avec éventuellement un profil vertical de vol, défini par une ou plusieurs altitudes et des temps de passage.

Avantageusement, le système de calcul de mission 10 est en outre propre à établir des paramètres de plan de vol, notamment le poids et l'équilibre de l'aéronef, le carton de décollage et d'atterrissage (c'est-à-dire les données de vol pour le pilote relatives au guidage telles que les vitesses V1, V2, VR sur la piste, l'accélération au lâcher des freins, le régime moteur au décollage, et/ou l'assiette au décollage), le calcul des masses limites au décollage et à l'atterrissage, la météorologie à basse vitesse (c'est-à-dire en surface) et à grande vitesse (c'est-à-dire en route), les informations de contrôle aérien (service de diffusion ATIS pour « Automated Terminal Information Service », e-NOTAM pour « Notice to airmen » , fréquence de télécommunications, FIRS pour « Flight Information RegionS », centre de contrôle aérien), et/ou les terrains alternatifs disponibles à destination, et en cours de route.

En référence à la figure 1, le système de calcul de mission 10 comporte un moteur de calcul 40 de trajectoires et avantageusement, une interface utilisateur 42 de paramétrage et de restitution formant une platine de mission. Il comporte un module 43 de calcul d'indice de bénéfice environnemental associé à chaque trajectoire établie par le moteur de calcul 40.

L'interface utilisateur 42 comporte par exemple au moins un afficheur 44, associé à un gestionnaire d'affichage 44A sur l'afficheur 44 et au moins un organe 46 de sélection et de saisie d'information par l'utilisateur, qui peut être un clavier réel ou virtuel, une souris et/ou un système tactile.

L'interface utilisateur 42 est propre à autoriser l'utilisateur à saisir au moins une partie des spécifications opérationnelles, notamment les points géographiques 18, 20 d'origine et de destination, des points de passage, des horaires souhaités, des charges souhaitées, un vent maximum sur la trajectoire, etc.

Elle est propre avantageusement à permettre à l'utilisateur de définir au moins une partie du contexte de mission, en particulier les contraintes de navigation et de confort passager, et/ou de définir au moins une partie du contexte avion.

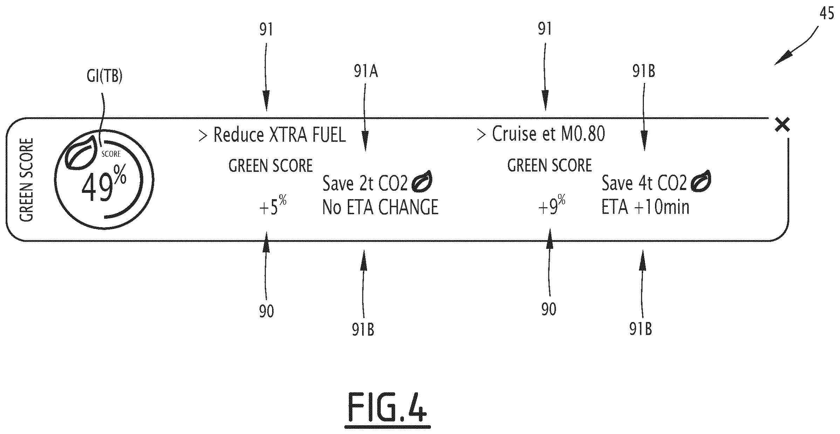

Comme on le verra plus bas, l'interface utilisateur 42 est en outre propre à afficher au moins une fenêtre 45 de présentation d'indicateurs de bénéfice environnemental en fonction des trajectoires établies suivant des spécifications opérationnelles prédéfinies (voir figure 4), et le cas échéant, une fenêtre 47 de sélection, par l'utilisateur, d'un mode d'optimisation de trajectoire, lorsque l'utilisateur souhaite déterminer le bénéfice environnemental d'une option particulière de trajectoire.

Un exemple d'interface 42 est décrit dans la demande de brevet français intitulée « Système de calcul de mission d'un aéronef, comportant une platine de mission et procédé associé » déposée sous le numéro 17 01234 par la Demanderesse.

Le moteur de calcul 40 est connecté à l'interface 42. Il est avantageusement raccordé également au système de conduite de vol 14, au système de gestion et de suivi 16.

Il est propre à interroger une base de données 50 météorologique et/ou une base de données 52 d'information de navigation, par exemple par l'intermédiaire d'un réseau de données, notamment un réseau de données sans fil.

La base de données météorologique 50 contient des données météorologiques actuelles et prédictives dans la zone de navigation de l'aéronef dans un volume de mission s'étendant entre le point d'origine 18 et le point de destination 20. Le volume de mission présente de préférence une largeur significative, par exemple au moins 700 miles nautiques, de part et d'autre de la trajectoire orthodromique entre le point d'origine 18 et le point de destination 20.

Ces données météorologiques sont fournies à plusieurs niveaux de vol, par exemple tous les 304 m (1000 pieds), à une altitude comprise par exemple entre 0 m et 15545 m (51000 pieds).

Les données météorologiques sont fournies en altitude mais aussi en fournissant un composant météorologique évolutif dans le temps. Ce composant évolutif est obtenu à l'aide de données de prévision météorologiques, pouvant inclure une pluralité de cartes météorologiques à des instants successifs dans le temps (par exemple toutes les heures).

Ces données météorologiques incluent notamment la vitesse et la direction du vent, la température, la pression, les précipitations, les phénomènes dangereux (gel, orages / cumulonimbus), la turbulence, le niveau de la tropopause, les nuages de cendre volcanique, les nuages de poussière / sable, la visibilité, ainsi que les observations aéronautiques sur zone ou en route (METAR, PIREPS) et les prévisions sur zone (TAF)... Elles comportent éventuellement la définition et l'évolution dans le temps et dans l'espace des coordonnées géographiques de zones 28 de phénomènes météorologiques dangereux et/ou de zones de turbulences 30.

Ces données météorologiques définissent un contexte météorologique, de préférence évolutif, dans le volume de mission s'étendant entre le point géographique d'origine 18 et le point géographique de destination 20.

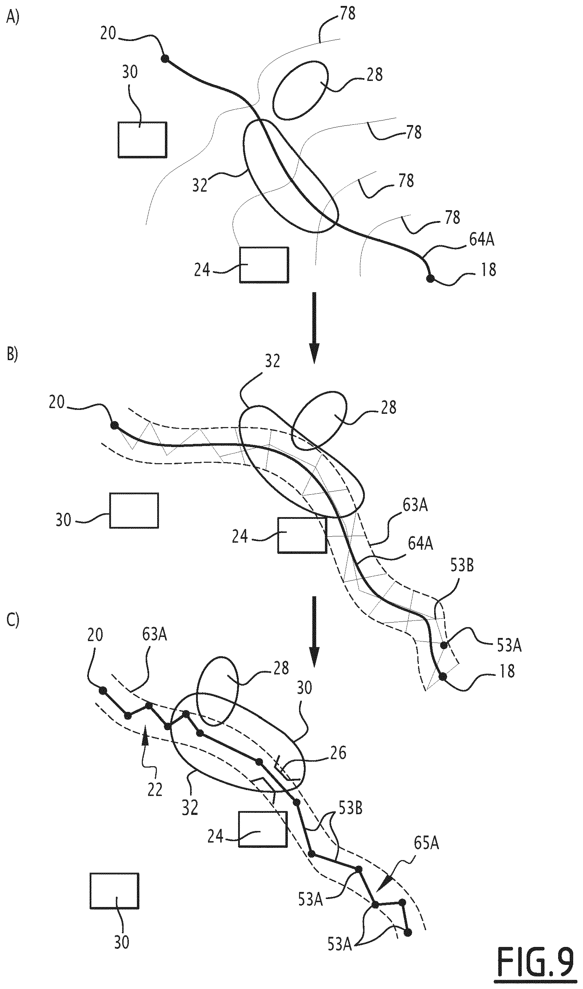

La base de données d'information de navigation 52 contient des données d'information sur les terrains au point d'origine 18 et au point de destination 20, et entre ces points 18, 20. La base de données d'information de navigation 52 comporte avantageusement une sous-base de données aéroports (longueurs de piste, orientation des pistes, pentes, etc.) et une sous-base de données de navigation. Les données de navigation incluent notamment un réseau de points de passage 53A (ou « waypoints ») et les trajectoires 53B imposées entre les points de passage, tel que définies par les autorités aériennes dans chaque pays (voir figure 9).

Elle contient avantageusement la définition des coordonnées géographiques de zones et/ou de niveaux de vol interdits 24, notamment en raison de données géopolitiques, et/ou de routes 26 aériennes imposées.

Elle comporte éventuellement la définition de zones 32 de couverture de télécommunications par satellite (SATCOM).

Le moteur de calcul 40 comporte au moins un calculateur comprenant au moins un processeur 54 et une mémoire 56. La mémoire 56 contient des modules logiciels propres à être exécutés par le processeur 54. En variante, les modules sont réalisés au moins partiellement sous forme de composants logiques programmables, ou encore sous forme de circuits intégrés dédiés.

Dans cet exemple, la mémoire 56 contient un module logiciel 58 d'initialisation de spécifications de mission, propre à acquérir des spécifications opérationnelles de la mission à partir notamment de l'interface 42, et comportant un module logiciel 60 de récupération d'un contexte météorologique à partir de la base de données 50, et un module logiciel 62 de détermination de performances avion, en fonction des spécifications de mission, du contexte météorologique et du contexte avion.

Selon l'invention, la mémoire 56 contient également au moins un module logiciel 64, 65 de calcul de trajectoire en fonction des performances avion déterminées, du contexte météorologique et des spécifications de mission.

Dans un exemple avantageux, illustré par la figure 1, en rapport avec la figure 9, la mémoire 56 contient un premier module logiciel 64 de calcul d'une première trajectoire de mission optimale 64A, en fonction des performances avion déterminées, du contexte météorologique et des spécifications de mission, le premier module de calcul 64 étant propre à calculer la première trajectoire optimale de mission 64A de manière non contrainte par un réseau de points de passage 53A et/ou de trajectoires 53B imposées entre les points de passage 53A.

Avantageusement, comme décrit dans la demande française n°1800734, la mémoire 56 contient aussi un module 63 de définition, autour de la première trajectoire optimale de mission 64A, d'une région à optimiser 63A de la trajectoire optimale 64A et un deuxième module 65 de calcul d'une trajectoire optimisée 65A de l'aéronef dans la région à optimiser 63A, de manière contrainte par un réseau de points de passages 53A et/ou de trajectoires 53B imposées entre les points de passage 53A.

Le module d'initialisation 58 est propre à acquérir les spécifications opérationnelles de la mission à partir de l'interface 42, et/ou du système de gestion et de suivi 16.

Le module de récupération 60 est propre à interroger la base de données météorologique 50 pour obtenir notamment les vitesses et les directions du vent dans le volume de mission s'étendant entre le point d'origine 18 et le point de destination 20, à plusieurs niveaux de vol.

Le module de détermination 62 comporte une application logicielle 66 de détermination du poids et de l'équilibre de l'aéronef, destinée à déterminer le centre de gravité de l'aéronef, une application logicielle 68 de détermination de performances haute vitesse, et avantageusement une application logicielle 70 de détermination de performances basse vitesse.

L'application 66 de détermination du poids et de l'équilibre de l'aéronef est propre à déterminer la position du centre de gravité de l'aéronef en l'absence de carburant dans l'aéronef (ou « Zero Fuel Weight Center of Gravity ») et la masse de l'aéronef en l'absence de carburant dans l'aéronef (ou « Zero Fuel Weight»), en fonction de la masse à vide de l'aéronef, des équipements embarqués dans l'aéronef, des passagers et/ou du fret embarqué, et de leur position dans l'aéronef, ainsi qu'une surveillance du domaine de vol de l'avion (diagramme masse - centrage).

L'application de détermination de performances haute vitesse 68 est propre à déterminer la masse de carburant à embarquer dans l'aéronef sur une trajectoire donnée, par exemple une trajectoire orthodromique entre le point d'origine 18 et le point de destination 20, en utilisant la position du centre de gravité et la masse de l'aéronef en l'absence de carburant dans l'aéronef (ou « Zero Fuel Weight») déterminées par l'application 66, une vitesse air prédéterminée, par exemple saisie ou calculée à partir des données saisies par l'interface utilisateur 42, le contexte météorologique récupéré à partir du module 60, notamment des vitesses de vent et des températures et éventuellement le contexte avion, par exemple le type et l'âge des moteurs, récupéré à partir du module d'initialisation 58.

L'application de détermination de performances haute vitesse 68 comporte en outre des fonctions de calcul de consommation instantanée de carburant et de variation de la masse avion instantanée au cours d'une trajectoire, utilisant avantageusement la position du centre de gravité et la masse de l'aéronef en l'absence de carburant dans l'aéronef, une vitesse air prédéterminée, par exemple saisie ou calculée à partir des données saisies par l'interface utilisateur 42, le contexte météorologique récupéré à partir du module 60, notamment des vitesses de vent et des températures et éventuellement le contexte avion, par exemple le type et l'âge des moteurs, récupéré à partir du module d'initialisation 58.

L'application de détermination de performances haute vitesse 68 comporte également une fonction de détermination des niveaux de vol atteignables en fonction de la vitesse air prédéterminée, du contexte météorologique, et éventuellement du contexte avion.

Ces fonctions de calcul de consommation instantanée, de variation de la masse avion instantanée et de détermination des niveaux de vol atteignables sont propres à être appelées par le module de calcul 64 pour le calcul de courbes d'iso-déplacement comme on le verra plus bas.

L'application de détermination de performances basse vitesse 70 est propre à déterminer notamment la masse maximale de l'aéronef (et le carton de décollage) permettant à l'aéronef de décoller et/ou d'atterrir sur un terrain, en fonction de données de longueurs de pistes récupérées à partir de la base de données 52, et du contexte météorologique récupéré à partir du module 60.

Dans un exemple avantageux, le premier module de calcul 64 est tel que décrit dans la demande de brevet EP3715786 de la Demanderesse.

Il est configuré pour calculer, à partir d'au moins un point choisi accessible à l'aéronef, une pluralité de courbes d'iso-déplacement 78, en particulier de courbes isochrones, de courbes d'iso-consommation de carburant ou de courbes d'iso-coût, et éventuellement des courbes d'iso-déplacement étendues, à un ou plusieurs paliers de vol.

Le premier module de calcul 64 est configuré pour choisir une trajectoire optimale 64A en se fondant sur les courbes d'iso-déplacement 78 calculées.

En référence à la figure 9, le premier module de calcul 64 est propre à déterminer chaque point de la trajectoire optimale 64A de manière non contrainte par un réseau de points de passage 53A et/ou de trajectoires 53B imposées entre les points de passage 53A.

Ainsi, la détermination de la trajectoire optimale 64A par le premier module de calcul 64 est mise en œuvre comme si l'aéronef était apte à effectuer un vol libre en tenant compte des spécifications de mission, mais sans tenir compte du réseau de points de passage 53A et/ou de trajectoires 53B imposées entre les points de passage 53A qui sont définis par les autorités de contrôle aérien.

Le premier module de calcul 64 est propre à définir ainsi une trajectoire optimale 64A non seulement dans le plan horizontal, mais avantageusement aussi dans le plan vertical.

Par définition, une courbe isochrone est une courbe reliant les points accessibles à l'aéronef à partir d'un point donné (qui peut être le point d'origine 18 ou un point sur une courbe isochrone) en un temps donné qui correspond à un ou plusieurs incréments de temps. Chaque incrément de temps est par exemple compris entre 1 minute et 1 heure, notamment entre 2 minutes et 10 minutes, par exemple 5 minutes.

Par définition, une courbe d'iso-consommation de carburant est une courbe reliant les points accessibles à l'aéronef à partir d'un point donné avec une consommation en carburant donnée qui correspond à un ou plusieurs incréments de carburant consommé. Chaque incrément de temps consommé est choisi à une valeur constante par exemple comprise entre 22,7 kg (50 livres) et 453,6 kg (1000 livres), notamment entre 36,3 kg (80 livres) et 54,4 kg (120 livres).

Dans un exemple, les courbes d'iso-déplacement sont des courbes d'iso-coût, le coût étant défini comme une fonction du temps de parcours et du carburant consommé, par exemple comme un rapport du temps de parcours et du carburant consommé.

Chaque incrément de déplacement est un incrément de coût d'une valeur donnée constante.

Dans cet exemple, chaque courbe d'iso-déplacement est déterminée à partir d'un point donné en calculant à partir du point donné tous les points accessibles à l'aéronef, à une vitesse air donnée, en tenant compte du contexte météorologique, notamment de la direction et de l'intensité du vent, telles que fournies par le module de récupération 60 et des performances avion, telles que déterminées par les fonctions de calcul de l'application 68.

En référence à la figure 9, le module de définition 63, lorsqu'il est présent est avantageusement propre à définir la région à optimiser 63A de la trajectoire en fonction d'une distance latérale prédéterminée à chaque point de la trajectoire optimale 64A définie par le premier module de calcul 64 et en fonction des spécifications opérationnelles de mission, notamment du contexte de mission, en particulier des contraintes de navigation, des contraintes météorologiques, et des contraintes de confort passager.

Avantageusement, le module de définition 63 est propre à délimiter latéralement la région à optimiser 63A de la trajectoire 64A par des limites latérales s'étendant latéralement à une distance choisie en fonction de la densité du réseau aérien de chaque point de la trajectoire optimale 64A.

Cette distance choisie est généralement inférieure à 1852 km (1000 miles nautiques ou « nm ») et peut être comprise entre 185 km (100 nm) et 926 km (500 nm) dans un réseau de faible densité, par exemple en Afrique, et entre 183 km (99 nm) et 55 km (30 nm) dans un réseau de forte densité comme en Europe.

Ainsi, la région à optimiser 63A est définie généralement par une bande englobant la trajectoire 64A. La bande est potentiellement contrainte également par des zones de vol interdites 24, par des zones 28 de phénomènes météorologiques dangereux et/ou par des zones de turbulences 30. Elle englobe selon le cas des zones de couverture satellite 32.

Le deuxième module de calcul 65 de trajectoires 65A, lorsqu'il est présent comporte une application de définition d'un réseau de nœuds entre le point géographique d'origine 18 et le point géographique de destination 20 à partir du réseau de points de passages 53A et/ou de trajectoires 53B imposées entre les points de passage 53A, et une application de définition d'un coût associé au passage d'un nœud à un nœud adjacent parmi les nœuds du réseau.

Le deuxième module de calcul 65 comporte également une application de détermination de la trajectoire optimisée 65A dans le réseau de nœuds sur la base d'une minimisation du coût total cumulé entre le point géographique d'origine 18 et le point géographique de destination 20.

L'algorithme est par exemple un algorithme de Dijkstra et/ou un algorithme A*. L'algorithme de Dijkstra prend en entrée le réseau pondéré défini plus haut entre le point géographique d'origine 18 et le point géographique de destination 20.

Une description de l'utilisation de l'algorithme de Dijkstra est donnée dans la demande de brevet en France n°1800734.

Une description de l'algorithme A* est par exemple donnée dans l'article téléchargeable à l'adresse suivante : https://fr.wikipedia.org/wiki/Algorithme_A*.

Une fois la trajectoire optimisée 65A obtenue, le moteur de calcul 40 est avantageusement propre à déterminer au moins un paramètre de mission de l'aéronef correspondant à la trajectoire optimale 64A ou la trajectoire optimisée 65A, le cas échéant.

Le paramètre de mission est par exemple une masse totale au décollage de l'aéronef. Cette masse au décollage est calculée à chaque itération par le module de calcul 64 puis par le module de calcul 65, sur la base de la consommation estimée sur la trajectoire entre le point d'origine 18 et le point de destination 20, calculée à l'aide des fonctions de calcul de la consommation instantanée de carburant et de variation de la masse avion instantanée, et sur la base d'une charge en passagers et en fret prédéfinie dans les spécifications opérationnelles.

Le moteur de calcul 40 est ensuite propre à effectuer des itérations de calcul utilisant successivement les modules 64, 65 jusqu'à obtenir une trajectoire optimisée finale 65A après convergence.

Une fois la convergence obtenue, le moteur de mission 40 est propre à établir une masse estimée de carburant consommée par l'aéronef entre le point géographique d'origine 18 et le point géographique de destination 20 sur la trajectoire finale obtenue à partir des spécifications opérationnelles propres à cette trajectoire, ainsi qu'un temps estimé d'arrivée (ETA) au point de destination 20.

Une fois la trajectoire optimisée finale obtenue, le moteur de calcul 40 fournit un fichier de données de trajectoire définissant les coordonnées géographiques de la trajectoire en fonction du temps.

Ce fichier de données est propre à être récupéré par l'équipage et/ou à être chargé par saisie manuelle ou par transfert de données dans le système de conduite de vol 14, en vue d'être utilisé lors du vol.

Selon l'invention, le module de calcul d'indice de bénéfice environnemental 43 est propre à calculer, pour la ou pour chaque trajectoire potentielle T obtenue par le module de calcul 40, un indice de bénéfice environnemental GI(T), propre à cette trajectoire.

Il comporte au moins un calculateur comprenant au moins un processeur et une mémoire, qui sont éventuellement communs avec le processeur 54 et la mémoire 56 du moteur de calcul 40. La mémoire contient des modules logiciels propres à être exécutés par le processeur. En variante, les modules sont réalisés au moins partiellement sous forme de composants logiques programmables, ou encore sous forme de circuits intégrés dédiés.

Le module de calcul 43 est avantageusement propre à calculer l'indice de bénéfice environnemental de chaque trajectoire potentielle établie par le moteur de calcul 40, à partir d'au moins deux trajectoires de référence TR1, TR2 prédéfinies, et d'une fonction de corrélation établie à partir des trajectoires de référence.

A cet effet, le module de calcul 43 est propre à activer le moteur de calcul de mission 40 pour définir une première trajectoire de référence TR1 correspondant à une mission prédéfinie minimisant le temps de vol entre le point d'origine 18 et le point de destination 20, et une deuxième trajectoire de référence TR2 correspondant à une mission ayant un minimum d'impact environnemental, notamment un minimum de production de dioxyde de carbone.

Le module de calcul 43 est propre à initialiser le moteur de calcul 40, pour déterminer la mission qui présente le temps de vol le plus court entre le point d'origine 18 et le point de destination 20, en utilisant la vitesse maximum acceptable la plus élevée pour l'aéronef, en utilisant le contexte avion et le contexte météorologique de la mission et la trajectoire la plus rapide en projection dans le plan horizontal et dans le plan vertical.

La vitesse maximum acceptable est par exemple définie par un Mach maximum acceptable (volable), pour un modèle d'aéronef donné, par exemple supérieur à 0,85 et par exemple égal à 0,86.

Avantageusement, le premier module de calcul de trajectoire 64 et le deuxième moteur de calcul de trajectoire 65 sont propres à être activés pour minimiser le temps de vol entre le premier point géographique d'origine 18 et le point géographique de destination 20 avec une trajectoire en vol contraint par un réseau de points de passages et de trajectoires imposées entre les points de passage, les points de passages et les trajectoires imposées étant définis par les autorités de contrôle aérien.

Le moteur de calcul 40 est donc propre à obtenir, pour la première trajectoire de référence TR1, une première quantité de carburant C1(TR1) consommée par l'aéronef entre le point géographique d'origine 18 et le point géographique de destination 20, ainsi qu'un premier temps estimé d'arrivée (ETA1) au point de destination 20.

La trajectoire obtenue sera à la fois la plus rapide et la moins vertueuse en termes d'émissions de dioxyde de carbone.

A l'inverse, pour l'établissement de la deuxième trajectoire de référence TR2, un profil optimal de mission est choisi en utilisant un profil adapté à la croisière en vitesse maximale, obtenu par les modules 64, 65 et un Mach minimal, inférieur à 0,82, notamment égal à 0,80 est choisi.

Avantageusement, le premier module de calcul de trajectoire 60 est propre à être activé pour calculer la deuxième trajectoire de référence TR2 entre le premier point géographique d'origine 18 et le point géographique de destination 20 avec une trajectoire en vol libre, sans activer le deuxième module 65 de calcul. Aucune contrainte en temps de vol n'est fixée.

Le moteur de calcul 40 est donc propre à obtenir, pour la deuxième trajectoire de référence TR2, une deuxième quantité de carburant C2(TR2) consommée par l'aéronef entre le point géographique d'origine 18 et le point géographique de destination 20, ainsi qu'un deuxième temps estimé d'arrivée (ETA2) au point de destination 20.

Le module de calcul 43 est alors propre à calculer les quantités Q1(TR1), Q2(TR2) de dioxyde de carbone susceptibles d'être produites en mettant en œuvre respectivement la première trajectoire de référence TR1 et en mettant en œuvre de la deuxième trajectoire de référence TR2.

Ces quantités Q1(TR1), Q2(TR2) sont calculées respectivement à partir de la première quantité de carburant consommée C1(TR1) sur la première trajectoire de référence TR1 et de la deuxième quantité de carburant consommée C2(TR2) sur la deuxième trajectoire de référence TR2, obtenues par le moteur de calcul 40, puis en convertissant la quantité de carburant consommée en une quantité de dioxyde de carbone produite, par exemple par un coefficient de proportionnalité, par exemple égal à 3,163 puisqu'une tonne de carburant consommée produit généralement 3,163 tonnes de dioxyde de carbone.

Le module de calcul 43 est ensuite propre à déterminer les paramètres de la fonction de corrélation F, à partir des quantités Q1(TR1), Q2(TR2) de dioxyde de carbone produites en mettant en œuvre la première trajectoire de référence TR1, et en mettant en œuvre la deuxième trajectoire de référence TR2.

A cet effet, le module de calcul 43 est propre à attribuer à la première quantité de dioxyde de carbone Q1(TR1) correspondant à la première trajectoire de référence TR1, une valeur minimale GIR1 d'indice de bénéfice environnemental. Cette valeur GIR1 est de préférence non nulle et est par exemple égale à 50%.

Le module de calcul 43 est propre à attribuer à la deuxième quantité de dioxyde de carbone Q2(TR2) correspondant à la deuxième trajectoire de référence TR2, une valeur maximale GIR2 d'indice de bénéfice environnemental, par exemple égale à 100%.

La fonction de corrélation F relie ainsi une quantité de dioxyde de carbone Q(T) produite sur une trajectoire potentielle T, à un indice de bénéfice environnemental GI(T).

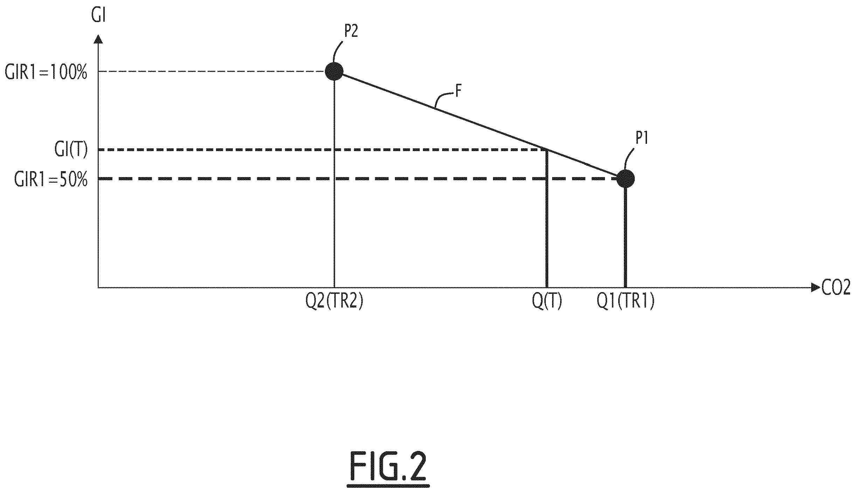

Dans l'exemple représenté sur la figure 2, la fonction de corrélation F est une fonction affine, entre le premier point P1 défini par la quantité Q1(TR1) de dioxyde de carbone produite correspondant à la première trajectoire de référence TR1 et la valeur minimale GIR1 d'indice de bénéfice environnemental et le deuxième point P2 défini par a quantité Q2(TR2) de dioxyde de carbone produite correspondant à la deuxième trajectoire de référence, et la valeur maximale GIR2 d'indice de bénéfice environnemental. En variante la fonction présente un profil qui passe sous la fonction affine au voisinage des quantités maximales Q1(TR1) de dioxyde de carbone produite correspondant à la première trajectoire de référence TR1. Ceci permet de pénaliser plus l'indice de bénéfice environnemental GI(T) pour des trajectoires produisant une quantité importante de dioxyde de carbone.

Ainsi, pour toute trajectoire potentielle T évaluée, le module de calcul 43 est propre à calculer un indice de bénéfice environnemental GI(T) de cette trajectoire à partir de la fonction de corrélation F et de la quantité Q(T) de dioxyde de carbone produite sur cette trajectoire potentielle T, telle que déterminée par le moteur de calcul 40.

Dans un premier mode de réalisation, le module de calcul 43 est propre à déterminer une pluralité d'indices de bénéfice environnemental correspondant à diverses opportunités de trajectoires, prédéfinies sur la base de spécifications opérationnelles différentes notamment de modes d'optimisation différents.

Cette détermination est effectuée de préférence après la fourniture d'une trajectoire de base TB par un fournisseur extérieur ou par le moteur de calcul 40 avant la mise en œuvre de la mission.

Les trajectoires prédéfinies sont par exemple une trajectoire T1 minimisant la quantité de carburant transportée dans l'aéronef, une trajectoire T2 autorisant une réduction maximale de vitesse de l'aéronef, une trajectoire T3 impliquant un calcul précis du poids et de l'équilibre de l'aéronef par exemple à l'aide de l'application logicielle 66 de détermination, une trajectoire T4 dans laquelle le déplacement vertical de l'aéronef est libre, et une trajectoire T5 dans laquelle la route de l'aéronef est optimisée. Une trajectoire optimisée est obtenue à l'aide du premier moteur de calcul 60, en prenant en compte les vents dans le calcul de la trajectoire et que la trajectoire est avantageusement déterminée en vol libre. L'optimisation est effectuée au moins en projection dans un plan horizontal.

L'indice de bénéfice environnemental GI(Ti) pour chaque trajectoire Ti est calculé à partir de la quantité Q(Ti) de dioxyde de carbone susceptible d'être engendrée par la mise en œuvre de chaque trajectoire Ti parmi la trajectoire de base TB et chaque trajectoire prédéfinie.

Le module de calcul 43 est alors apte à déterminer une différence D(Ti) d'indice de bénéfice environnemental GI(Ti) entre chaque trajectoire optimisée, et l'indice environnemental GI(TB) de la trajectoire de base.

Ceci permet à un utilisateur de déterminer le bénéfice d'utiliser d'une trajectoire optimisée sur l'impact environnemental, par rapport à la trajectoire de base TB.

Dans ce premier mode de réalisation, le gestionnaire d'affichage 44A est propre à afficher sur l'afficheur 44 la fenêtre 45A illustrant un indicateur 90 de bénéfice environnemental qui dans cet exemple, est la valeur de la différence d'indice de bénéfice environnemental entre la trajectoire de base TB et la trajectoire optimisée.

Cet affichage est associé à une indication 91 du type d'optimisation envisagée (ici « Reduce XTRA Fuel » soit « Réduire le carburant en extra », pour la trajectoire T1 minimisant la quantité de carburant transportée dans l'aéronef et « Cruise at M0.80 » soit « Croisière à Mach 0.8 », pour la trajectoire T2 autorisant une réduction maximale de vitesse de l'aéronef) et à une quantité de dioxyde de carbone économisée 91A (« save 2t CO2 » pour « sauvez 2t de CO2 »). En outre, l'impact 91B sur l'heure estimée d'arrivée est également affiché, pour permettre à l'utilisateur d'en prendre connaissance (« No ETA change » pour « Pas de changement d'heure théorique d'arrivée » ou « ETA +10 min » pour « heure théorique d'arrivée + 10 min ».

Le gestionnaire d'affichage 45 est propre à afficher la fenêtre 45A par exemple sur un écran du système de gestion de vol 16, sous forme d'une fenêtre contextuelle.

Dans un deuxième mode de réalisation, en référence aux Figures 5 à 8, le module de calcul 43 est propre à être activé sur sélection de l'utilisateur, à partir d'une trajectoire de base TB obtenue qui peut être une trajectoire de base fournie par un fournisseur, ou une trajectoire de base fournie par une optimisation suivant le premier mode de réalisation.

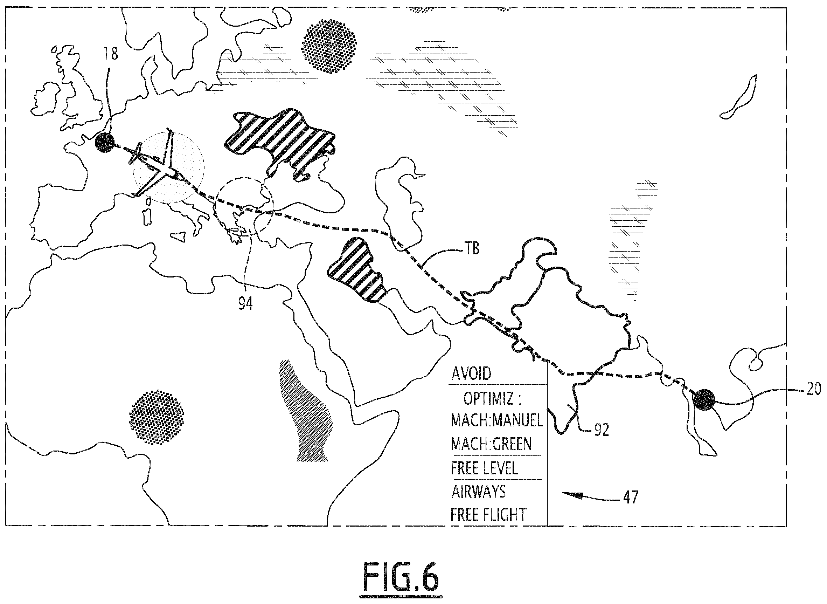

Dans ce mode de réalisation, en référence à la figure 6, l'utilisateur est propre à activer l'interface 42, pour sélectionner, sur une carte représentant la trajectoire de base TRB, au moins une zone à optimiser 92, ou/et au moins une zone à éviter 94.

La sélection est par exemple faite par délimitation manuelle de la zone manuelle de la zone 92, 94 par l'utilisateur, ou en choisissant un ou plusieurs pays ou régions constituant la zone 92, 94, à l'aide d'une fenêtre ou d'une sélection prédéfinie sur l'afficheur 44 de l'interface 42.

Dans le cas d'une zone à optimiser 92, le gestionnaire d'affichage 45 sur l'afficheur 44 est en outre propre à afficher, comme illustré sur la figure 6, une fenêtre 47 de sélection d'un mode d'optimisation.

Le mode d'optimisation est par exemple un mode de choix manuel d'un Mach défini (« Mach manuel »), un mode de vol avec une trajectoire autorisant une réduction maximale de vitesse de l'aéronef (« Mach green »), d'un mode de vol dans laquelle le déplacement vertical de l'aéronef est libre (« Free level »), un mode de vol suivant des routes existantes (« Airways ») ou un mode de vol libre (« Free flight »).

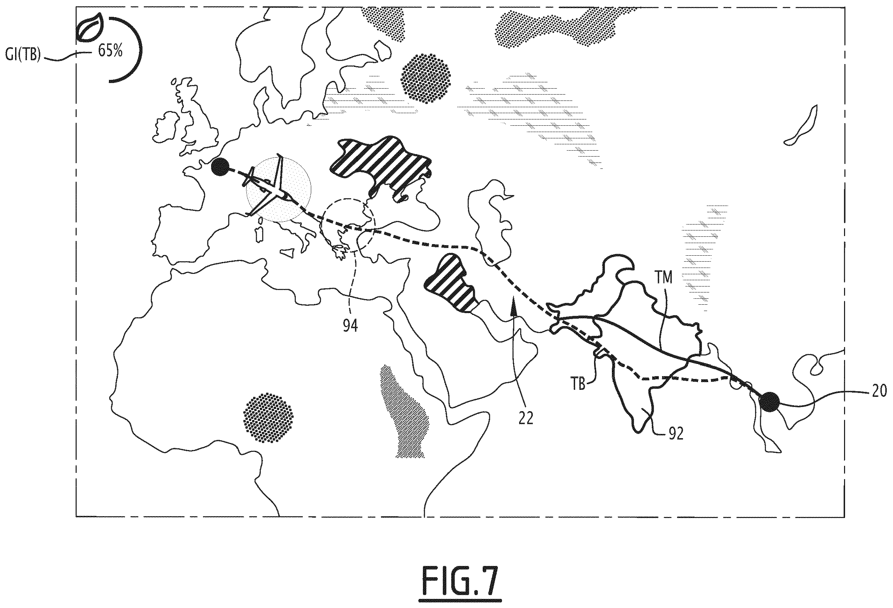

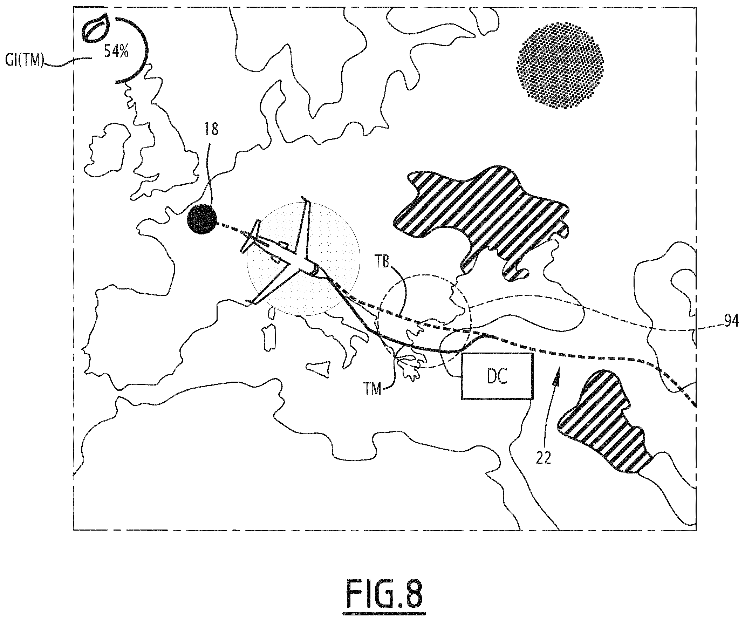

Une fois que l'utilisateur a sélectionné une zone à optimiser 92 ou une zone à éviter 94, et éventuellement un mode d'optimisation, le module de calcul 43 est propre à activer le moteur de calcul 40 pour engendrer une trajectoire modifiée TM dans la zone à optimiser 92 (voir figures 6 et 7), ou pour éviter la zone à éviter (voir figure 8).

Une fois la trajectoire modifiée TM calculée, le module de calcul 43 est propre à récupérer la quantité de carburant susceptible d'être utilisée pour mettre en œuvre cette trajectoire TM, telle que calculée par le moteur de calcul 40, puis à la convertir en une quantité de dioxyde de carbone produite Q(TM).

Le module de calcul 43 est propre à déterminer alors l'indice de bénéfice environnemental GI(TM) associé à la trajectoire modifiée à partir de la quantité de dioxyde de carbone produite Q(TM) et de la fonction de corrélation F, comme décrit plus haut.

Le module de calcul 43 est propre à déterminer par ailleurs l'indice de bénéfice environnemental GI(TB) de la trajectoire de base, et à calculer par exemple une différence d'indice de bénéfice environnemental entre la trajectoire de base TB et la trajectoire optimisée TM.

Dans le mode de réalisation représenté sur les figures 8 et 9, le gestionnaire d'affichage 44A est alors propre à afficher, avant l'optimisation de la trajectoire, la valeur de l'indice de bénéfice environnemental GI(TB) correspondant à la trajectoire de base TB, et après la sélection, par l'utilisateur d'un mode d'optimisation à l'aide de la fenêtre 47 et le calcul par le moteur de calcul 40 de la trajectoire modifiée TM, un indicateur de bénéfice environnemental qui peut être le nouvel indice de bénéfice environnemental GI(TM) correspondant à cette trajectoire modifiée ou/et une différence d'indice de bénéfice environnemental entre la trajectoire de base et la trajectoire optimisée. Il est propre à afficher éventuellement une différence de carburant consommé DC entre la trajectoire modifié TM et la trajectoire de base TB.

L'utilisateur est ainsi apte à sélectionner des zones à optimiser 92 ou des zones à éviter 94 de manière très simple, afin d'affiner la trajectoire de base TB et obtenir une trajectoire modifiée. Il peut facilement déterminer si les modifications effectuées sont susceptibles d'améliorer le bénéfice environnemental, et dans quelle mesure cette amélioration se produit.

L'utilisateur est ainsi apte à mettre en œuvre cette optimisation avec sélection du mode d'optimisation avant le vol, ou directement en cours de vol, pour tenir compte de l'évolution du vol.

Un procédé de calcul de mission utilisant le système de calcul de mission 10 selon l'invention va maintenant être décrit.

Initialement, l'utilisateur, notamment l'équipage, saisit au moins une partie des spécifications opérationnelles à l'aide de l'interface de paramétrage 42. L'utilisateur définit par exemple pour chaque étape de la mission, le point géographique d'origine 18, le point géographique de destination 20 et éventuellement, un nombre de passagers à transporter, une vitesse air souhaitée, un horaire de départ et/ou un horaire d'arrivée imposé, une distance maximale à parcourir.

Il active alors le moteur de calcul 40 pour définir une trajectoire de base TB.

En variante, le système de calcul de mission 10 récupère une trajectoire de base TB à partir d'un fournisseur de trajectoires auquel a été fourni les spécifications opérationnelles précitées.

Le module de calcul 43 active alors le moteur de calcul 40 pour déterminer, à partir des spécifications opérationnelles définies plus haut, la première trajectoire de référence TR1 et la deuxième trajectoire de référence TR2, et la première quantité de carburant C1(TR1) et la deuxième quantité de carburant C2(TR2) correspondant à la mise en œuvre respective de ces trajectoires TR1, TR2.

Le module de calcul 43 calcule ensuite les quantités Q1(TR1), Q2(TR2) de dioxyde de carbone susceptibles d'être produites en mettant en œuvre respectivement la première trajectoire de référence TR1 et en mettant en œuvre la deuxième trajectoire de référence TR2, par exemple en utilisant un coefficient de proportionnalité comme décrit plus haut.

Le module de calcul 43 détermine ensuite les paramètres de la fonction de corrélation F, par exemple en considérant que cette fonction est une fonction affine, à partir des quantités Q1(TR1), Q2(TR2) de dioxyde de carbone. Il attribue à cet effet à chaque quantité Q1(TR1), Q2(TR2) un valeur respective GIR1, GIR2 d'indice de bénéfice environnemental.

Puis, dans un premier mode de réalisation, le module de calcul 43 détermine une pluralité d'indices de bénéfice environnemental GI(Ti) correspondant à diverses opportunités de trajectoires Ti, prédéfinies sur la base de spécifications opérationnelles différentes, notamment de modes d'optimisation différents.

Le module de calcul 43 active le moteur de calcul 40 pour calculer chaque trajectoire Ti, en fonction des spécifications opérationnelles et notamment du mode à optimiser correspondant à cette trajectoire Ti pour obtenir les quantités respectives Q(Ti) de dioxyde de carbone susceptibles d'être engendrées par la mise en œuvre de chaque trajectoire Ti et par la trajectoire de base TB.

Puis, le module de calcul 43 obtient l'indice de bénéfice environnemental GI(Ti) pour chaque trajectoire Ti à partir de la quantité Q(Ti) de dioxyde de carbone susceptible d'être engendrée par la mise en œuvre de chaque trajectoire Ti parmi la trajectoire de base TB et chaque trajectoire prédéfinie Ti en utilisant la fonction de corrélation F.

Le module de calcul 43 détermine alors une différence D(Ti) entre l'indice de bénéfice environnemental GI(Ti) de chaque trajectoire potentielle et l'indice environnemental GI(TB) de la trajectoire de base.

Dans ce premier mode de réalisation, le gestionnaire d'affichage 44A affiche sur l'afficheur 44 la fenêtre 45 illustrant un indicateur 90 de bénéfice environnemental. Dans cet exemple, l'indicateur 90 est la valeur de la différence D(Ti) d'indice de bénéfice environnemental entre la trajectoire potentielle Ti et la trajectoire de base TB.

Cet affichage est associé à une visualisation du type d'optimisation envisagée 91 et à une quantité de dioxyde de carbone économisée 91A. En outre, l'impact 91B sur l'heure estimée d'arrivée est également affiché, pour permettre à l'utilisateur d'en prendre connaissance.

Dans un deuxième mode de réalisation, le module de calcul 43 est activé sur sélection de l'utilisateur, à partir d'une trajectoire de base TRB obtenue qui peut être une trajectoire de base fournie par un fournisseur, ou une trajectoire de base fournie par une optimisation suivant le premier mode de réalisation.

Dans ce mode de réalisation, l'utilisateur active l'interface 42, pour sélectionner, sur une carte représentant la trajectoire de base TRB, au moins une zone à optimiser 92, ou/et au moins une zone à éviter 94.

Dans le cas d'une zone à optimiser 92, le gestionnaire d'affichage 45 sur l'afficheur 44 affiche, comme illustré sur la figure 6, une fenêtre de sélection 47 d'un mode d'optimisation.

Une fois que l'utilisateur a sélectionné une zone à optimiser 92 ou une zone à éviter 94, et un mode d'optimisation à l'aide de la fenêtre 47, le module de calcul 43 est active le moteur de calcul 40 pour engendrer une trajectoire modifiée TM dans la zone à optimiser 92 (voir figures 6 et 7), ou/et pour éviter la zone à éviter 94 (voir figure 8).

Une fois la trajectoire modifiée calculée, le module de calcul 43 récupère la quantité de carburant C(TM) susceptible d'être utilisée pour mettre en œuvre cette trajectoire, telle que calculée par le moteur de calcul 40, puis la convertit en une quantité de dioxyde de carbone produite Q(TM).

Le module de calcul 43 détermine alors l'indice de bénéfice environnemental GI(TM) associé à la trajectoire à partir de la quantité de dioxyde de carbone produite Q(TM) et de la fonction de corrélation F.

Le module de calcul 43 détermine par ailleurs l'indice de bénéfice environnemental GI(TB) de la trajectoire de base, et calcule par exemple une différence d'indice de bénéfice environnemental entre la trajectoire de base et la trajectoire optimisée.

Dans le mode de réalisation représenté sur les figures 8 et 9, le gestionnaire d'affichage 44A affiche alors, avant l'optimisation de la trajectoire, la valeur de l'indice de bénéfice environnemental GI(TB) correspondant à la trajectoire de base, et après la sélection par l'utilisateur d'un mode d'optimisation et le calcul par le moteur de calcul 40 de la trajectoire modifiée TM, le nouvel indice de bénéfice environnemental GI(TM) correspondant à la trajectoire modifiée TM ou/et la différence d'indice de bénéfice environnemental entre la trajectoire modifiée et la trajectoire de base TB.

Grâce à l'invention qui vient d'être décrite, un utilisateur peut déterminer a priori des opportunités de trajectoires, et peut évaluer de manière absolue et relative le bénéfice environnemental qui est produit par les opportunités de trajectoires, par rapport à une première trajectoire de référence minimisant le temps de vol, et par rapport à une deuxième trajectoire de référence minimisant l'impact sur l'environnement.

Il est en outre apte à déterminer, par rapport à une trajectoire de base fournie par un fournisseur de trajectoire de vol ou résultant d'une première optimisation, quel serait le bénéfice environnemental de la mise en œuvre de différents modes à optimiser de la trajectoire.

Ces données lui sont présentées préalablement au vol, ce qui lui permet de choisir de la manière la plus efficace possible, avant le vol, le mode d'optimisation de trajectoire possible et/ou souhaité, en évaluant le bénéfice environnemental que produit ce mode d'optimisation.

En outre, l'utilisateur est également propre, dans un deuxième mode d'utilisation, à sélectionner une zone à optimiser 92 sur une trajectoire de base TB et/ou une zone à éviter 94 sur la trajectoire de base, et à déterminer dans l'absolu et par rapport à une trajectoire de base TB, quel serait le bénéfice environnemental éventuel de la modification de trajectoire effectuée.

Cette détermination peut être faite avant le vol ou pendant celui-ci. L'utilisateur peut alors visualiser très facilement si la trajectoire modifiée est adéquate, et dans quelle mesure elle produit un impact environnemental positif ou négatif par rapport à la trajectoire de base TB.

Cette détermination est effectuée par des moyens simples et peu coûteux, mais qui sont cependant représentatifs de l'impact environnemental des différentes options fournies à l'utilisateur.

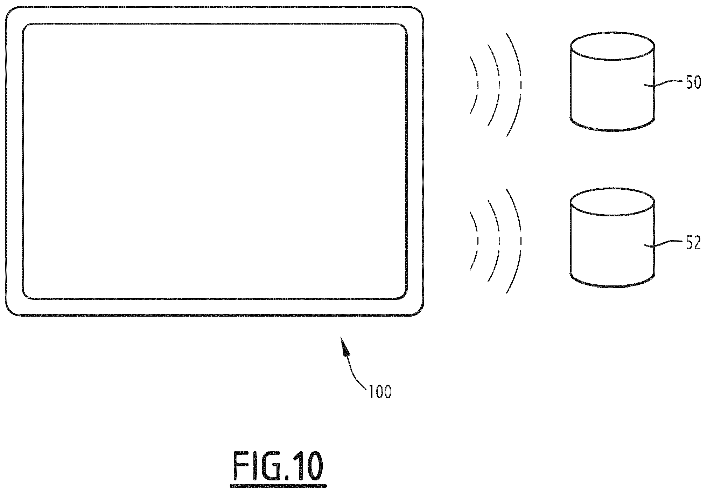

Dans la variante illustrée par la figure 10, le système de calcul de 10 est intégré au sein d'un bagage de vol électronique (« Electronic Flight Bag » ou « EFB » en anglais), ou d'un dispositif électronique portable 100.

Le dispositif électronique portable 100 est par exemple raccordé aux bases de données 50, 52 par une liaison de données sans fil suivant un protocole de transmission sans fil par exemple de type Wifi (par exemple suivant la Norme IEEE 802.11), ou Bluetooth (par exemple suivant la Norme IEEE 802.15-1-2005).

## Revendications

1. Système (10) de calcul de mission d'un aéronef, comportant un moteur (40) de calcul de trajectoires de l'aéronef lors de la mission, le moteur de calcul de trajectoires (40) étant propre à calculer au moins une trajectoire potentielle de mission entre un point géographique d'origine (18) et un point géographique de destination (20) en fonction de performances avion, de spécifications opérationnelles de mission, et d'un contexte météorologique de préférence évolutif dans un volume de mission entre le point géographique d'origine et le point géographique de destination,
**caractérisé par** un module (43) de calcul d'indice de bénéfice environnemental, propre à activer le moteur de calcul de trajectoires (40) pour déterminer une première trajectoire de référence à partir de premières spécifications opérationnelles de mission définissant une mission la plus rapide entre le point géographique d'origine (18) et le point géographique de destination (20), et pour déterminer une deuxième trajectoire de référence, à partir de deuxièmes spécifications opérationnelles de mission définissant une mission minimisant la quantité de dioxyde de carbone produite durant la mission,
le module de calcul d'indice de bénéfice environnemental (43) étant propre à calculer une première quantité de dioxyde de carbone susceptible d'être produite en mettant en œuvre la première trajectoire de référence, une deuxième quantité de dioxyde de carbone susceptible d'être produite en mettant en œuvre la deuxième trajectoire de référence, et une quantité potentielle de dioxyde de carbone susceptible d'être produite en mettant en œuvre la trajectoire potentielle, et à déterminer un indice de bénéfice environnemental de la trajectoire potentielle à partir de la première quantité de dioxyde de carbone, de la deuxième quantité de dioxyde de carbone et de la quantité de dioxyde de carbone potentielle, ainsi que d'une fonction de corrélation reliant la quantité de dioxyde de carbone produite à l'indice de bénéfice environnemental,
le système de calcul de mission (10) comportant en outre un afficheur (44), et un gestionnaire d'affichage (44A) sur l'afficheur (44), propre à afficher sur l'afficheur (44), après le calcul de la trajectoire potentielle par le moteur de calcul de trajectoires (40), au moins un indicateur (90) de bénéfice environnemental obtenu à partir de l'indice de bénéfice environnemental.

2. Système de calcul de mission (10) selon la revendication 1, dans laquelle l'indicateur (90) de bénéfice environnemental comporte une grandeur numérique égale à l'indice de bénéfice environnemental ou calculée à partir de l'indice de bénéfice environnemental et/ou une couleur représentative de la grandeur numérique.

3. Système de calcul de mission (10) selon l'une quelconque des revendications précédentes, dans laquelle la valeur maximale de l'indice de bénéfice environnemental correspond à la valeur de l'indice de bénéfice environnemental calculée pour la deuxième trajectoire de référence, la valeur minimale de l'indice de bénéfice environnemental correspondant à la valeur de l'indice de bénéfice environnemental calculée pour la première trajectoire de référence, la valeur minimale de l'indice de bénéfice environnemental présentant une valeur non nulle.

4. Système de calcul de mission (10) selon la revendication 3, dans lequel la fonction de corrélation est une fonction décroissante définie par le module de calcul d'indice de bénéfice environnemental (43) à partir de la valeur maximale de l'indice de bénéfice environnemental associée à la deuxième quantité de dioxyde de carbone, de la valeur minimale de l'indice de bénéfice environnemental associée à la première quantité de dioxyde de carbone produite, la fonction décroissante étant de préférence une fonction affine.

5. Système de calcul de mission (10) selon l'une quelconque des revendications précédentes, dans lequel la première trajectoire de référence est calculée à partir de spécifications opérationnelles comprenant un Mach maximum possible de l'aéronef, le calcul de la deuxième trajectoire de référence étant effectué en utilisant un Mach réduit d'au moins 5% par rapport au Mach maximum possible utilisé pour la première trajectoire de référence, avantageusement en utilisant une trajectoire en vol libre, sans être contrainte par un réseau de point de passage et de trajectoires imposées entre les points de passages.

6. Système de calcul de mission (10) selon l'une quelconque des revendications précédentes, dans lequel le module de calcul d'indice de bénéfice environnemental (43) est propre à activer le moteur de calcul de trajectoires (40) pour déterminer une pluralité de trajectoires potentielles, utilisant des spécifications opérationnelles différentes prédéfinies, le module de calcul d'indice de bénéfice environnemental (43) étant propre à calculer chaque indice de bénéfice environnemental potentiel correspondant à chaque trajectoire potentielle, l'ensemble de gestion d'affichage (44A) sur l'afficheur (44) étant propre à afficher une fenêtre (45) de présentation simultanée des indicateurs de bénéfice environnemental correspondant à chaque indice de bénéfice environnemental calculé pour chaque trajectoire potentielle.

7. Système de calcul de mission (10) selon la revendication 6, dans lequel les spécifications opérationnelles des trajectoires potentielles sont choisies parmi une minimisation de la quantité carburant emporté par l'aéronef, un Mach réduit de l'aéronef, un calcul exact du poids et de l'équilibre de l'aéronef par une application (66) de poids et d'équilibre, une optimisation verticale de trajectoire, une optimisation de route impliquant une trajectoire en vol libre, ou/et une optimisation de route impliquant une trajectoire en vol libre suivie d'une optimisation de trajectoire autour de la trajectoire en vol libre pour respecter des points de passage imposés, et des trajectoires imposés entre les points de passage imposés.

8. Système de calcul de mission (10) selon l'une quelconque des revendications précédentes, dans lequel le gestionnaire d'affichage (44A) sur l'afficheur (44) est propre à afficher sur l'afficheur (44) une fenêtre (47) de définition de spécifications opérationnelles de la mission, propre à permettre à un utilisateur de définir au moins une spécification opérationnelle d'une trajectoire potentielle de l'aéronef, le module de calcul d'indice de bénéfice environnemental (43) étant propre à calculer un indice de bénéfice environnemental correspondant à la trajectoire potentielle calculée à partir de la spécification opérationnelle définie par l'utilisateur sur la fenêtre (47) de définition.

9. Système de calcul selon la revendication 8, dans lequel le gestionnaire d'affichage (44A) sur l'afficheur (44) est propre à afficher sur l'afficheur (44) une carte incluant le point géographique d'origine (18), le point géographique de destination (20), et une trajectoire de base entre le point géographique d'origine (18) et le point géographique de destination (20), la fenêtre (47) de définition étant propre à permettre à l'utilisateur de sélectionner une zone à éviter (94) ou/et une zone à optimiser (92) de la trajectoire de base, le moteur de calcul de trajectoires (40) étant propre à recalculer une trajectoire potentielle modifiant la trajectoire de base après sélection de la zone à éviter (94) ou/et de la zone à optimiser (92), le module de calcul d'indice de bénéfice environnemental (43) étant propre à calculer un indice de bénéfice environnemental correspondant à la trajectoire potentielle modifiant la trajectoire de base.

10. Système de calcul selon la revendication 9, dans lequel le gestionnaire d'affichage (44A) sur l'afficheur (44) est propre à afficher sur la carte, l'indicateur de bénéfice environnemental déterminé à partir de l'indice de bénéfice environnemental correspondant à la trajectoire potentielle modifiant la trajectoire de base, en association avec la trajectoire potentielle modifiant la trajectoire de base.

11. Système de calcul selon l'une quelconque des revendications 9 à 10, dans lequel la fenêtre (47) de définition est propre à permettre à l'utilisateur de définir au moins une spécification opérationnelle choisie parmi un Mach déterminé, un Mach d'évolution à vitesse réduite, une optimisation des niveaux de vol, une trajectoire en vol libre, une trajectoire imposée par un réseau de points de passages et/ou de trajectoires imposées entre les points de passage, le moteur de calcul de trajectoires (40) étant propre à calculer la trajectoire potentielle modifiant la trajectoire de base en fonction de la spécification opérationnelle sélectionnée.

12. Système de calcul selon l'une quelconque des revendications 9 à 11, dans lequel la fenêtre (47) de définition est propre à permettre à l'utilisateur de définir une zone à éviter (94) ou/et une zone à optimiser (92) manuellement sur la carte.

13. Procédé de calcul de mission d'un aéronef, mis en œuvre à l'aide d'un système de calcul de mission (10), le procédé comprenant les étapes suivantes :
- calcul par un moteur de calcul de trajectoires (40) du système de calcul de mission (10) d'au moins une trajectoire potentielle de mission entre un point géographique d'origine (18) et un point géographique de destination (20) en fonction de performances avion, de spécifications opérationnelles de mission, et d'un contexte météorologique de préférence évolutif dans un volume de mission entre le point géographique d'origine (18) et le point géographique de destination (2),
- activation du moteur de calcul de trajectoires (40) par un module (43) de calcul d'indice de bénéfice environnemental du système de calcul de mission (10) pour déterminer une première trajectoire de référence à partir de premières spécifications opérationnelles de mission définissant une mission la plus rapide entre le point géographique d'origine et le point géographique de destination, et pour déterminer une deuxième trajectoire de référence, à partir de deuxièmes spécifications opérationnelles de mission définissant une mission minimisant la quantité de dioxyde de carbone produite durant la mission,
- calcul par le module de calcul d'indice de bénéfice environnemental (43) d'une première quantité de dioxyde de carbone susceptible d'être produite en mettant en œuvre la première trajectoire de référence, d'une deuxième quantité de dioxyde de carbone susceptible d'être produite en mettant en œuvre la deuxième trajectoire de référence, et d'une quantité potentielle de dioxyde de carbone susceptible d'être produite en mettant en œuvre la trajectoire potentielle,
- détermination d'un indice de bénéfice environnemental de la trajectoire potentielle à partir de la première quantité, de la deuxième quantité et de la quantité potentielle, ainsi que d'une fonction de corrélation reliant la quantité de dioxyde de carbone produite à l'indice de bénéfice environnemental,
- affichage par un gestionnaire d'affichage (44A) du système de calcul de mission (10) sur un afficheur (44) du système de calcul de mission (10), après le calcul de la trajectoire potentielle par le moteur de calcul de trajectoires (40), d'au moins un indicateur (90) de bénéfice environnemental obtenu à partir de l'indice de bénéfice environnemental.

14. Procédé selon la revendication 13, comportant le calcul d'une pluralité de trajectoires potentielles par le moteur de calcul de trajectoires (40) en fonction de spécifications opérationnelles prédéfinies, le calcul, par le module de calcul d'indice de bénéfice environnemental (43) d'un indice de bénéfice environnemental correspondant à chaque trajectoire potentielle, et l'affichage sur l'afficheur (44), par le gestionnaire d'affichage (44A), d'un indicateur de bénéfice environnemental (90) correspondant à chaque trajectoire potentielle.

15. Procédé selon l'une quelconque des revendications 13 ou 14, comportant l'affichage par le gestionnaire d'affichage (44A) sur l'afficheur (44) d'une fenêtre (47) de définition de spécifications opérationnelles de la mission, puis la définition par un utilisateur d'au moins une spécification opérationnelle d'une trajectoire potentielle de l'aéronef, et le calcul par le module de calcul d'indice de bénéfice environnemental (43) d'une valeur d'indice de bénéfice environnemental correspondant à la trajectoire potentielle définie à partir de la spécification opérationnelle, définie par l'utilisateur sur la fenêtre (47) de définition.

## Patentansprüche

1. System (10) zur Berechnung der Mission eines Luftfahrzeugs, aufweisend eine Flugbahnberechnungsengine (40) des Luftfahrzeugs während der Mission, wobei die Flugbahnberechnungsengine (40) imstande ist, mindestens eine potenzielle Flugbahn der Mission zwischen einem geographischen Ursprungspunkt (18) und einem geographischen Zielpunkt (20) in Abhängigkeit von Flugzeugleistungen, operativen Missionsspezifikationen und einem vorzugsweise sich entwickelnden meteorologischen Kontext in einem Missionsvolumen zwischen dem geographischen Ursprungspunkt und dem geographischen Zielpunkt zu berechnen,
**gekennzeichnet durch** ein Modul (43) zur Berechnung eines Umweltnutzenindex, das imstande ist, die Flugbahnberechnungsengine (40) zu aktivieren, um eine erste Referenzflugbahn aus ersten operativen Missionsspezifikationen zu bestimmen, die eine schnellste Mission zwischen dem geografischen Ursprungspunkt (18) und dem geografischen Zielpunkt (20) definieren, und um eine zweite Referenzflugbahn aus zweiten operativen Missionsspezifikationen zu bestimmen, die eine Mission definieren, die die Menge des während der Mission erzeugten Kohlendioxids minimiert,
wobei das Modul zur Berechnung eines Umweltnutzenindex (43) imstande ist, eine erste Kohlendioxidmenge, die durch Umsetzung der ersten Referenzflugbahn erzeugt werden kann, eine zweite Kohlendioxidmenge, die durch Umsetzung der zweiten Referenzflugbahn erzeugt werden kann, und eine potenzielle Kohlendioxidmenge, die durch Umsetzung der potenziellen Flugbahn erzeugt werden kann, zu berechnen, und einen Umweltnutzenindex der potenziellen Flugbahn aus der ersten Kohlendioxidmenge, der zweiten Kohlendioxidmenge und der potenziellen Kohlendioxidmenge sowie aus einer Korrelationsfunktion, die die erzeugte Kohlendioxidmenge mit dem Umweltnutzenindex verbindet, zu bestimmen,
wobei das System zur Berechnung der Mission (10) ferner ein Display (44) und einen Anzeigemanager (44A) auf dem Display (44) umfasst, der imstande ist, nach der Berechnung der potenziellen Flugbahn durch die Flugbahnberechnungsengine (40) mindestens einen Umweltnutzenindikator (90), der aus dem Umweltnutzenindex erhalten wird, auf dem Display (44) anzuzeigen.

2. Missionsberechnungssystem (10) nach Anspruch 1, wobei der Umweltnutzenindikator (90) eine numerische Größe, die gleich dem Umweltnutzenindex ist oder aus dem Umweltnutzenindex berechnet wird, und/oder eine Farbe, die für die numerische Größe repräsentativ ist, umfasst.

3. Missionsberechnungssystem (10) nach einem der vorhergehenden Ansprüche, wobei der Maximalwert des Umweltnutzenindex dem für die zweite Referenzflugbahn berechneten Wert des Umweltnutzenindex entspricht, der Minimalwert des Umweltnutzenindex dem für die erste Referenzflugbahn berechneten Wert des Umweltnutzenindex entspricht, und der Minimalwert des Umweltnutzenindex einen von Null verschiedenen Wert aufweist.

4. Missionsberechnungssystem (10) nach Anspruch 3, wobei die Korrelationsfunktion eine abnehmende Funktion ist, die von dem Modul zur Berechnung des Umweltnutzenindex (43) aus dem Maximalwert des Umweltnutzenindex, der mit der zweiten Menge an Kohlendioxid verbunden ist, dem Minimalwert des Umweltnutzenindex, der mit der ersten Menge an erzeugtem Kohlendioxid verbunden ist, definiert wird, wobei die abnehmende Funktion vorzugsweise eine affine Funktion ist.

5. Missionsberechnungssystem (10) nach einem der vorhergehenden Ansprüche, wobei die erste Referenzflugbahn anhand operativer Spezifikationen berechnet wird, die ein maximal mögliches Mach des Flugzeugs umfassen, wobei die Berechnung der zweiten Referenzflugbahn unter Verwendung eines Mach durchgeführt wird, das um mindestens 5 % gegenüber dem für die erste Referenzflugbahn verwendeten maximal möglichen Mach reduziert ist, vorteilhafterweise unter Verwendung einer Flugbahn im freien Flug, ohne durch ein Netz von Wegpunkten und vorgeschriebenen Flugbahnen zwischen den Wegpunkten eingeschränkt zu sein.

6. Missionsberechnungssystem (10) nach einem der vorhergehenden Ansprüche, wobei das Modul (43) zur Berechnung eines Umweltnutzenindex imstande ist, die Flugbahnberechnungsengine (40) zu aktivieren, um eine Vielzahl von potenziellen Flugbahnen zu bestimmen, unter Verwendung verschiedener vordefinierter operativer Spezifikationen, wobei das Modul (43) zur Berechnung eines Umweltnutzenindex imstande ist, jeden potenziellen Umweltnutzenindex zu berechnen, der jeder potenziellen Flugbahn entspricht, wobei der Anzeigemanager (44A) auf dem Display (44) imstande ist, ein Fenster (45) zur gleichzeitigen Darstellung der Umweltnutzenindikatoren anzuzeigen, die jedem berechneten Umweltnutzenindex für jede potenzielle Flugbahn entsprechen.

7. Missionsberechnungssystem (10) nach Anspruch 6, wobei die operativen Spezifikationen der potenziellen Flugbahnen aus einer Minimierung der vom Flugzeug mitgeführten Treibstoffmenge, einem reduzierten Mach des Flugzeugs, einer exakten Berechnung des Gewichts und der Balance des Flugzeugs durch eine Gewichts- und Balanceanwendung (66), einer vertikalen Flugbahnoptimierung, einer Streckenoptimierung, die eine Freiflugstrecke einbezieht, oder/und einer Streckenoptimierung, die eine Freiflugstrecke einbezieht, gefolgt von einer Flugbahnoptimierung um die Freiflugstrecke herum, um vorgeschriebene Wegpunkte einzuhalten, und vorgeschriebene Flugbahnen zwischen den vorgeschriebenen Wegpunkten ausgewählt sind.

8. Missionsberechnungssystem (10) nach einem der vorhergehenden Ansprüche, wobei der Anzeigemanager (44A) auf dem Display (44) imstande ist, auf dem Display (44) ein Definitionsfenster (47) von operativen Spezifikationen der Mission anzuzeigen, das geeignet ist, einem Benutzer zu ermöglichen, mindestens eine operative Spezifikation einer potenziellen Flugbahn des Luftfahrzeugs zu definieren, wobei das Modul zur Berechnung des Umweltnutzenindex (43) imstande ist, einen Umweltnutzenindex zu berechnen, der der potenziellen Flugbahn entspricht, die anhand der vom Benutzer auf dem Definitionsfenster (47) definierten operativen Spezifikation berechnet wurde.

9. Berechnungssystem nach Anspruch 8, wobei der Anzeigemanager (44A) auf dem Display (44) imstande ist, auf dem Display (44) eine Karte anzuzeigen, die den geografischen Ursprungspunkt (18), den geografischen Zielpunkt (20) und eine Basisflugbahn zwischen dem geografischen Ursprungspunkt (18) und dem geografischen Zielpunkt (20) enthält, wobei das Definitionsfenster (47) imstande ist, dem Benutzer die Auswahl einer zu vermeidenden Zone (94) oder/und einer zu optimierenden Zone (92) der Basisflugbahn zu ermöglichen, wobei die Flugbahnberechnungsengine (40) imstande ist, eine potenzielle Flugbahn, die die Basisflugbahn nach Auswahl der zu vermeidenden Zone (94) oder/und der zu optimierenden Zone (92) ändert, neu zu berechnen, wobei das Modul zur Berechnung des Umweltnutzenindex (43) imstande ist, einen Umweltnutzenindex zu berechnen, der der potenziellen Flugbahn, die die Basisflugbahn ändert, entspricht.

10. Berechnungssystem nach Anspruch 9, wobei der Anzeigemanager (44A) auf dem Display (44) imstande ist, auf der Karte den Umweltnutzenindikator anzuzeigen, der aus dem Umweltnutzenindex bestimmt wird, der der potenziellen Flugbahn, die die Basisflugbahn ändert, in Verbindung mit der potenziellen Flugbahn, die die Basisflugbahn ändert, entspricht.

11. Berechnungssystem nach einem der Ansprüche 9 bis 10, wobei das Definitionsfenster (47) imstande ist, dem Benutzer zu ermöglichen, mindestens eine operative Spezifikation zu definieren, die aus einem bestimmten Mach, einem Mach für die Entwicklung mit reduzierter Geschwindigkeit, einer Optimierung der Flughöhen, einer Flugbahn im freien Flug, einer durch ein Netz von Durchgangspunkten und/oder von zwischen den Durchgangspunkten vorgeschriebenen Flugbahnen ausgewählt ist, wobei die Flugbahnberechnungsengine (40) imstande ist, die potenzielle Flugbahn zu berechnen, die die Basisflugbahn in Abhängigkeit von der ausgewählten operative Spezifikation ändert.

12. Berechnungssystem nach einem der Ansprüche 9 bis 11, wobei das Definitionsfenster (47) imstande ist, dem Benutzer zu ermöglichen, eine zu vermeidende Zone (94) oder/und eine zu optimierende Zone (92) manuell auf der Karte zu definieren.

13. Verfahren zur Berechnung der Mission eines Flugzeugs, das mithilfe eines Missionsberechnungssystems (10) durchgeführt wird, wobei das Verfahren die folgenden Schritte umfasst:
- Berechnung, durch eine Flugbahnberechnungsengine (40) des Missionsberechnungssystems (10), von mindestens einer potenziellen Missionsflugbahn zwischen einem geografischen Ursprungspunkt (18) und einem geografischen Zielpunkt (20) in Abhängigkeit von Luftfahrzeugleistungen, operativen Missionsspezifikationen und einem vorzugsweise sich entwickelnden meteorologischen Kontext in einem Missionsvolumen zwischen dem geografischen Ursprungspunkt (18) und dem geografischen Zielpunkt (2),
- Aktivierung der Flugbahnberechnungsengine (40) durch ein Modul (43) zur Berechnung eines Umweltnutzenindex des Missionsberechnungssystems (10), um eine erste Referenzflugbahn aus ersten operativen Missionsspezifikationen zu bestimmen, die eine schnellste Mission zwischen dem geografischen Ursprungspunkt und dem geografischen Zielpunkt definieren, und um eine zweite Referenzflugbahn aus zweiten operativen Missionsspezifikationen zu bestimmen, die eine Mission definieren, die die Menge des während der Mission erzeugten Kohlendioxids minimiert,
- Berechnung, durch das Modul (43) zur Berechnung des Umweltnutzenindex, einer ersten Menge an Kohlendioxid, die durch Umsetzung der ersten Referenzflugbahn erzeugt werden könnte, einer zweiten Menge an Kohlendioxid, die durch Umsetzung der zweiten Referenzflugbahn erzeugt werden könnte, und einer potenziellen Menge an Kohlendioxid, die durch Umsetzung der potenziellen Flugbahn erzeugt werden könnte,
- Bestimmung eines Umweltnutzenindex der potenziellen Flugbahn aus der ersten Menge, der zweiten Menge und der potenziellen Menge sowie einer Korrelationsfunktion, die die Menge des erzeugten Kohlendioxids mit dem Umweltnutzenindex verbindet,
- Anzeige, durch einen Anzeigemanager (44A) des Missionsberechnungssystems (10) auf einem Display (44) des Missionsberechnungssystems (10), nach der Berechnung der potenziellen Flugbahn durch die Flugbahnberechnungsengine (40), von mindestens einem Umweltnutzenindikator (90), der aus dem Umweltnutzenindex erhalten wird.

14. Verfahren nach Anspruch 13, umfassend die Berechnung einer Vielzahl von potenziellen Flugbahnen durch die Flugbahnberechnungsengine (40) in Abhängigkeit von vordefinierten Betriebsspezifikationen, wobei die Berechnung eines Umweltnutzenindex durch das Modul (43) zur Berechnung des Umweltnutzenindex jeder potenziellen Flugbahn entspricht und die Anzeige eines Umweltnutzenindikators (90) auf dem Display (44) durch den Anzeigemanager (44A) jeder potenziellen Flugbahn entspricht.

15. Verfahren nach einem der Ansprüche 13 oder 14, das die Anzeige eines Definitionsfensters (47) von operativen Spezifikationen der Mission durch den Anzeigemanager (44A) auf dem Display (44), dann die Definition mindestens einer operativen Spezifikation einer potenziellen Flugbahn des Luftfahrzeugs durch einen Benutzer und die Berechnung eines Werts des Umweltnutzenindex durch das Modul (43) zur Berechnung eines Umweltnutzenindex, der der potenziellen Flugbahn entspricht, die ausgehend von der operativen Spezifikation definiert wird, die durch den Benutzer auf dem Definitionsfenster (47) definiert wurde, aufweist.

## Claims

1. An aircraft mission calculation system (10), comprising a calculation engine (40) to calculate trajectories of the aircraft during the mission, the trajectory calculation engine (40) being able to calculate at least one potential mission trajectory between a geographic point of origin (18) and a geographic point of destination (20) as a function of aircraft performance, mission operational specifications, and of a meteorological context preferably evolving in a mission volume between the geographic point of origin and the geographic point of destination,
**characterized by** an environmental benefit index calculation module (43) able to activate the trajectory calculation engine (40) to determine a first reference trajectory from first mission operational specifications defining a fastest mission between the geographic point of origin (18) and the geographic point of destination (20), and to determine a second reference trajectory from second mission operational specifications defining a mission that minimizes the amount of carbon dioxide produced during the mission,
the environmental benefit index calculation module (43) being able to calculate a first amount of carbon dioxide that may be produced by implementing the first reference trajectory, a second amount of carbon dioxide that may be produced by implementing the second reference trajectory, and a potential amount of carbon dioxide that may be produced by implementing the potential trajectory and to determine an environmental benefit index of the potential trajectory from the first amount of carbon dioxide, the second amount of carbon dioxide and the potential amount of carbon dioxide, as well as a correlation function relating the amount of carbon dioxide produced to the environmental benefit index,
the mission calculation system (10) further including a display system (44), and a display manager (44A) on the display system (44), able to display on the display system (44), after the calculation of the potential trajectory by the trajectory calculation engine (40), at least one environmental benefit indicator (90) derived from the environmental benefit index.

2. The mission calculation system (10) according to claim 1, wherein the environmental benefit indicator (90) includes a numerical quantity equal to the environmental benefit index or calculated from the environmental benefit index and/or a color representative of the numerical quantity.

3. The mission calculation system (10) according to any of the preceding claims, wherein the maximum value of the environmental benefit index corresponds to the value of the environmental benefit index calculated for the second reference trajectory, the minimum value of the environmental benefit index corresponding to the value of the environmental benefit index calculated for the first reference trajectory, the minimum value of the environmental benefit index having a non-zero value.

4. The mission calculation system (10) according to claim 3, wherein the correlation function is a decreasing function defined by the environmental benefit index calculation module (43) from the maximum environmental benefit index value associated to the second amount of carbon dioxide, the minimum environmental benefit index value associated to the first amount of carbon dioxide produced, the decreasing function preferably being an affine function.

5. The mission calculation system (10) according to any one of the preceding claims, wherein the first reference trajectory is calculated from operational specifications comprising a maximum possible Mach of the aircraft, the calculation of the second reference trajectory being performed using a Mach reduced by at least 5% from the maximum possible Mach used for the first reference trajectory, advantageously using a free flight trajectory, without being constrained by a network of waypoints and imposed trajectories between the waypoints.

6. The mission calculation system (10) according to any of the preceding claims, wherein the environmental benefit index calculation module (43) is able to activate the trajectory calculation engine (40) to determine a plurality of potential trajectories, using different predefined operational specifications, the environmental impact index calculation module (43) being able to calculate each potential environmental benefit index corresponding to each potential trajectory, the display management assembly (44A) on the display system (44) being able to display a window (45) for simultaneous presentation of the environmental benefit indicators corresponding to each environmental benefit index calculated for each potential trajectory.

7. The mission calculation system (10) according to claim 6, wherein the operational specifications of the potential trajectories are chosen among a minimization of the amount of fuel carried by the aircraft, a reduced Mach of the aircraft, an accurate calculation of the weight and balance of the aircraft by a weight and balance application (66) a vertical trajectory optimization, a route optimization involving a free flight trajectory, and/or a route optimization involving a free flight trajectory followed by a trajectory optimization around the free flight trajectory to meet imposed waypoints, and imposed trajectories between the imposed waypoints.

8. The mission calculation system (10) according to any of the preceding claims, wherein the display manager (44A) on the display system (44) is able to display on the display system (44) a mission operational specification definition window (47) able to allow a user to define at least one operational specification of a potential trajectory of the aircraft, the environmental benefit index calculation module (43) being able to calculate an environmental benefit index corresponding to the potential trajectory calculated from the operational specification defined by the user on the definition window (47).

9. The calculation system according to claim 8, wherein the display manager (44A) on the display system (44) is able to display on the display system (44) a map including the geographic point of origin (18), the geographic point of destination (20), and a base trajectory between the geographic point of origin (18) and the geographic point of destination (20), the definition window (47) being able to allow the user to select a zone to be avoided (94) and/or a zone to be optimized (92) of the base trajectory, the trajectory calculation engine (40) being able to recalculate a potential trajectory modifying the base trajectory after selection of the zone to be avoided (94) and/or the zone to be optimized (92), the environmental benefit index calculation module (43) being able to calculate an environmental benefit index corresponding to the potential trajectory modifying the base trajectory.

10. The calculation system according to claim 9, wherein the display manager (44A) on the display system (44) is able to display on the map, the environmental benefit indicator determined from the environmental benefit index corresponding to the potential trajectory modifying the base trajectory, in association with the potential trajectory modifying the base trajectory.

11. The calculation system according to any one of claims 9 to 10, wherein the definition window (47) is able to allow the user to define at least one operational specification chosen from among a determined Mach, an Mach of evolution at reduced speed, an optimization of flight levels, a free flight trajectory, a trajectory imposed by a network of waypoints and/or imposed trajectories between waypoints, the trajectory calculation engine (40) being able to calculate the potential trajectory modifying the base trajectory as a function of the selected operational specification.

12. The calculation system according to any one of claims 9 to 11, wherein the definition window (47) is able to allow the user to define a zone to be avoided (94) and/or a zone to be optimized (92) manually on the map.

13. A method for calculating an aircraft mission, implemented using a mission calculation system (10), the method comprising the following steps:
- calculation by a trajectory calculation engine (40) of the mission calculation system (10) of at least one potential mission trajectory between a geographic point of origin (18) and a geographic point of destination (20) as a function of aircraft performance, mission operational specifications, and a meteorological context preferably evolving in a mission volume between the geographic point of origin (18) and the geographic point of destination (20),
- activating the trajectory calculation engine (40) by an environmental benefit index calculation module (43) of the mission calculation system (10) to determine a first reference trajectory from first mission operational specifications defining a fastest mission between the geographic point of origin and the geographic point of destination, and to determine a second reference trajectory from second mission operational specifications defining a mission minimizing the amount of carbon dioxide produced during the mission,
- calculation by the environmental benefit index calculation module (43) a first amount of carbon dioxide likely to be produced by implementing the first reference trajectory, a second amount of carbon dioxide likely to be produced by implementing the second reference trajectory, and a potential amount of carbon dioxide likely to be produced by implementing the potential trajectory,
- determining an environmental benefit index of the potential trajectory from the first quantity, the second quantity and the potential quantity, as well as a correlation function relating the amount of carbon dioxide produced to the environmental benefit index,
- displaying by a display manager (44A) of the mission calculation system (10) on a display system (44) of the mission calculation system (10), after the calculation of the potential trajectory by the trajectory calculation engine (40), at least one environmental benefit indicator (90) derived from the environmental benefit index.

14. The method according to claim 13, including calculating a plurality of potential trajectories by the trajectory calculation engine (40) as a function of predefined operational specifications, calculating, by the environmental benefit index calculation module (43), an environmental benefit index corresponding to each potential trajectory, and displaying on the display system (44), by the display manager (44A), an environmental benefit indicator (90) corresponding to each potential trajectory.

15. The method according to any one of claims 13 or 14, including the display manager (44A) displaying on the display system (44) a mission operational specification definition window (47), then the definition by a user of at least one operational specification of a potential trajectory of the aircraft and the calculation by the environmental benefit index calculation module (43) of an environmental benefit index value corresponding to the potential trajectory defined from the operational specification, defined by the user on the definition window (47).
